# EUROPÄISCHE PATENTANMELDUNG

(11) **EP 4 832 456 A1**
(43) Veröffentlichungstag der Anmeldung: **28.10.2026**
(21) Anmeldenummer: 26168415.3
(22) Anmeldetag: 27.03.2026
(51) Int. Cl.: H04L 67/12

(54) **GATEWAY FÜR EIN DATENERFASSUNGSSYSTEM, DATENERFASSUNGSSYSTEM UND VERFAHREN ZUR BETRIEBSÜBERWACHUNG EINES GATEWAYS IN EINEM DATENERFASSUNGSSYSTEM**

(30) Priorität: 23.04.2025 DE 102025115579
(71) Anmelder: Diehl Metering Systems GmbH, 90451 Nürnberg (DE)
(72) Erfinder: Fendt, Charles, 90547 Stein (DE)
(74) Vertreter: Diehl Patentabteilung

(57) **Zusammenfassung**

Gateway (20) für ein Datenerfassungssystem (100), welches Gateway (20) mit einem Kontroll-Knoten (10) gekoppelt ist, welcher Kontroll-Knoten (10) eingerichtet ist, um Zustandsdaten (21) des Gateways (20) zu erfassen und per Funk über ein Primär-Kommunikationssystem (PKS) an ein weiteres Gateway (20) des Datenerfassungssystems (100) zu übertragen.

## Beschreibung

Die Erfindung betrifft ein Gateway für ein Datenerfassungssystem, ein Datenerfassungssystem mit Betriebsüberwachung eines Gateways sowie ein Verfahren zur Betriebsüberwachung eines Gateways in einem Datenerfassungssystem.

### Technologischer Hintergrund

Sogenannte Smart Cities zeichnen sich durch eine Digitalisierung der Infrastruktur aus und sollen eine höhere Lebensqualität und Nachhaltigkeit durch Vernetzung und Automatisierung schaffen. Dabei spielt das Internet der Dinge (englisch: Internet of Things; kurz: loT), also die Vernetzung von analogen Dingen eine ausschlaggebende Rolle.

Auf diese Weise kann beispielsweise die Wasser- und Energieversorgung überwacht werden. Dies geschieht mithilfe eines loT-Netzwerks, indem eine Vielzahl von Messsensoren, genannt Knoten, an verschiedenen Orten die Wasserversorgung überwacht. Diese Knoten senden ihre Messdaten über ein Primär-Kommunikationssystem an sogenannte Gateways. Diese wiederum senden die Messdaten über ein Tertiär-Kommunikationssystem an ein Head-End-System. Das Head-End-System wird verwendet, um die Datenerfassung zu steuern, aber auch um die Daten zu sammeln und zur Analyse bereit zu stellen. Dabei decken die einzelnen Gateways im Allgemeinen nur einen Anteil aller Knoten ab, d.h. jedes Gateway kommuniziert nur mit einem Anteil aller Knoten per Primär-Kommunikationssystem. Ein Knoten kann dabei jedoch an einem oder mehreren Gateways angebunden sein.

Nun kann es zu einer Störung bei der Datenübertragung über ein Gateway kommen. Das Head-End-System bemerkt das im Allgemeinen nur insofern, dass die Kommunikation zu dem Gateway nicht wie erwartet verläuft oder sogar abgebrochen ist. Der Auslöser der Störung kann dabei aber vielfältig sein. So kann es sich dabei beispielsweise um ein Software- oder Hardwareproblem oder lediglich ein Problem mit der Stromversorgung des Gateways handeln. Auch eine Sachbeschädigung oder ein Diebstahl sind mögliche Störungsursachen.

Um den Auslöser genau zu identifizieren ist es möglich einen Mikro-Kontroller zur Identifizierung des Auslösers an dem Gateway einzurichten. Allerdings muss bisher für eine Übertragung des Auslösers an das Head-End-System eine Kommunikation des Gateways mit dem Mikro-Kontroller beispielsweise über das Tertiärkommunikationssystem oder einem alternativen Kommunikationsweg wie SMS zu dem Head-End-System bestehen ("in-band" Monitoring). Dies verbraucht neben den bereits bereitgestellten Kommunikationssystemen, dem Primär- und Tertiärkommunikationssystem, weitere Ressourcen und ist daher aufwendig.

Zudem besteht bei diesem "in-band" Monitoring noch immer der Nachteil, dass bei Stromausfall oder einer Störung der SIM-Karte eine Betriebsüberwachung beziehungsweise eine Übertragung der Störungsursache an das Head-End-System nicht möglich ist.

### Aufgabe der vorliegenden Erfindung

Es ist somit die Aufgabe der Erfindung ein Gateway sowie ein Datenerfassungssystem mit Betriebsüberwachung eines Gateways bereitzustellen, welche die Nachteile im Stand der Technik überwinden und eine effizientere und sicherere Betriebsüberwachung des Gateways ermöglichen. Ferner ist es die Aufgabe ein Verfahren zur Betriebsüberwachung eines Gateways in einem solchen Datenerfassungssystem bereitzustellen, welches eine effizientere und sicherere Betriebsüberwachung des Gateways ermöglicht.

### Lösung der Aufgabe

Die Aufgabe der Erfindung wird gelöst durch ein Gateway für ein Datenerfassungssystem, ein Datenerfassungssystem und ein Verfahren zur Betriebsüberwachung eines Gateways in einem Datenerfassungssystem mit den Merkmalen der jeweiligen unabhängigen Ansprüche. Vorteilhafte Ausführungsformen bilden den Gegenstand der abhängigen Unteransprüche.

Die Erfindung umfasst ein Gateway für ein Datenerfassungssystem. Das Gateway ist mit einem Kontroll-Knoten gekoppelt, welcher Kontroll-Knoten eingerichtet ist, um Zustandsdaten des Gateways zu erfassen und per Funk über ein Primär-Kommunikationssystem an ein weiteres Gateway des Datenerfassungssystems zu übertragen. Bei dem Kontroll-Knoten handelt es sich dabei im Allgemeinen um ein Modul mit einem Funkkommunikationssystem. Dieses System der Betriebsüberwachung nennt sich auch "out-of-band" Monitoring. Durch das Primär-Kommunikationssystem zwischen Kontroll-Knoten und dem einen weiteren Gateway können die Zustandsdaten des ersten Gateways auch ausgesendet werden ohne, dass eine Verbindung (über ein Tertiär-Kommunikationssystem) von dem ersten Gateway zu dem Head-End-System (oder auch anderen Bestandteilen des Datenerfassungssystems) besteht. Stattdessen reicht eine Verbindung (über das Primär-Kommunikationssystem) des Kontroll-Knotens zu dem weiteren Gateway aus. Das Primär-Kommunikationssystem kann dabei zur Funkübertragung auf einem vorgegebenen Primär-Frequenzband eingerichtet ist, welches Primär-Frequenzband eine Bandbreite ≤ 500 kHz, bevorzugt ≤ 250 kHz, besonders bevorzugt ≤ 125 kHz, aufweist.

Bevorzugt ist der Kontroll-Knoten fest mit dem Gateway verbunden oder vorzugsweise in einem Gehäuse des Gateways angeordnet. Somit kann die Kopplung zwischen Gateway und Kontroll-Knoten auch bei Diebstahl des Gateways bestehen bleiben. Bei einer Standorterfassung durch den Kontroll-Knoten kann dann sogar das Gateway geortet werden. Alternativ ist auch eine Anordnung am Gehäuse möglich.

Ein weiterer Aspekt der Erfindung betrifft ein Datenerfassungssystem umfassend ein Head-End-System, zumindest ein erstes Gateway und ein zweites Gateway, mehrere Knoten, und einen Kontroll-Knoten. Die Knoten sind jeweils zur Funkübertragung von Daten über ein Primär-Kommunikationssystem an das erste Gateway und/oder an das zweite Gateway eingerichtet. Das erste Gateway und das zweite Gateway sind jeweils zur Funkübertragung von Daten über ein Tertiär-Kommunikationssystem an das Head-End-System eingerichtet. Der Kontroll-Knoten ist zur Erfassung von Zustandsdaten des ersten Gateways und zur Funkübertragung der erfassten Zustandsdaten über das Primär-Kommunikationssystem an das zweite Gateway eingerichtet. Die Zustandsdaten des ersten Gateways können also über das zweite Gateway an das Head-End-System übertragen werden. Bei dem Primär-Kommunikationssystem zur Verbindung von Kontroll-Knoten und zweitem Gateway handelt es sich dabei (im Wesentlichen) um das gleiche (Kommunikations-)System wie das zur Funkübertragung von Daten von den Knoten an die Gateways.

Bevorzugt umfassen die Zustandsdaten Daten betreffend eine Position des ersten Gateways und/oder Daten betreffend eine Stromversorgung des ersten Gateways und/oder Daten betreffend eine Netzwerkkonfiguration über das Primär-Kommunikationssystem und/oder Daten betreffend eine Netzwerkkonfiguration über das Tertiär-Kommunikationssystem. Zum Erfassen dieser Zustandsdaten kann der Kontroll-Knoten entweder entsprechend eingerichtete Sensoren aufweisen oder das erste Gateway auslesen.

Vorteilshafterweise sind die Knoten festinstalliert und dazu eingerichtet, um Verbrauchsdaten zu erfassen. Dabei kann es sich auch um Daten über Wasserverbrauch, Stromverbrauch, Luftqualität oder dergleichen handeln. Die Knoten können an ein Stromnetz angeschlossen, einen Stromgenerator, zum Beispiel in Form eines Solarpanels, oder eine Batterie aufweisen.

Gemäß eines bevorzugten Aspekts ist der Kontroll-Knoten an eine Stromversorgung des ersten Gateways angebunden. In der Regel sind die Gateways fest installiert und an ein Stromnetz angeschlossen.

Gemäß eines besonders vorteilhaften Aspekts weist der Kontroll-Knoten eine von dem ersten Gateway unabhängige Stromquelle zum Betrieb des Kontroll-Knotens auf. Falls die Stromversorgung des Gateways gestört ist, kann der Betrieb des Kontroll-Knotens auf die vom ersten Gateway unabhängige Stromquelle (beispielsweise eine Batterie) umgestellt werden, sodass die Betriebsüberwachung weitergeführt werden kann.

Bevorzugt ist der Kontroll-Knoten zur unidirektionalen oder bidirektionalen Funkübertragung über das Primär-Kommunikationssystem mit dem zweiten Gateway eingerichtet ist. Dies ermöglich nicht nur die Übertragung der Zustandsdaten in Richtung des zweiten Gateways, sondern zusätzlich eine Übertragung von Befehlen an den Kontroll-Knoten.

Technisch vorteilhaft ist es, dass das Primär-Kommunikationssystem zur Funkübertragung auf einem vorgegebenen Primär-Frequenzband eingerichtet ist, welches Primär-Frequenzband eine Bandbreite ≤ 500 kHz, bevorzugt ≤ 250 kHz, besonders bevorzugt ≤ 125 kHz, aufweist. Bei einer schmalen Bandbreite ist eine Datenübertragung nicht nur energieeffizierter, sondern hat auch eine weitere Reichweite und ist weniger anfällig gegenüber externen Störungen.

Gemäß einem weiteren bevorzugten Aspekt ist das Primär-Kommunikationssystem auf einer Low Power Wide Area Network (LPWAN) Technologie und/oder das Tertiär-Kommunikationssystem auf einer Wide Area Network (WAN) oder Long Term Evolution (LTE) Technologie basierend. Mögliche LPWAN Technologien sind dabei LoRaWAN, Sigfox, Mioty, NB-IoT und LTE-M.

Gemäß einem technisch vorteilhaften Merkmal ist das erste Gateway ein Gateway des ersten Aspekts der Erfindung.

Ein weiterer Aspekt der Erfindung umfasst ein Verfahren zur Betriebsüberwachung eines Gateways in einem Datenerfassungssystem umfassend die folgenden Schritte:
- Bereitstellen eines Datenerfassungssystems mit den bisher benannten Merkmalen, wobei in einem Normalbetrieb des Datenerfassungssystems die Knoten Daten über das Primär-Kommunikationssystem an das erste Gateway und/oder das zweite Gateway übertragen und das erste Gateway und das zweite Gateway störungsfrei betrieben sind und jeweils Daten über das Tertiär-Kommunikationssystem an das Head-End-System übertragen.
- Erfassen der Zustandsdaten über das erste Gateway durch den Kontroll-Knoten und Übertragung über das Primär-Kommunikationssystem an das zweite Gateway; und
- Übertragung der Zustandsdaten über das erste Gateway durch das zweite Gateway über das Tertiärkommunikationssystem an das Head-End-System.

Bevorzugt erfasst das erste Gateway im Normalbetrieb Autostatusdaten über sich selbst und überträgt diese Autostatusdaten über das Tertiärkommunikationssystem an das Head-End-System, wobei das Head-End-System eingerichtet ist, um die Autostatusdaten und die von dem Kontroll-Knoten erfassten Zustandsdaten zu vergleichen. Durch den Vergleich können Störungen schneller erkannt werden, beispielsweise wenn entsprechende Datensätze voneinander abweichen. Die Zustandsdaten können dabei mit den Autostatusdaten übereinstimmen oder Daten enthalten, die über den Umfang der Autostatusdaten hinausgehen.

Vorteilhafterweise wird dem Kontroll-Knoten von dem zweiten Gateway ein Befehl zur Zustandsüberwachung über das Primär-Kommunikationssystem übertragen, welcher Befehl den Kontroll-Knoten veranlasst die Zustandsdaten über das erste Gateway zu erfassen. Der Befehl kann dabei zuvor vom Head-End-System an das zweite Gateway gesendet worden sein, wenn eine Störung festgestellt worden ist.

Weiterhin bevorzugt erfasst der Kontroll-Knoten die Zustandsdaten über das erste Gateway kontinuierlich. Der Kontroll-Knoten ist dabei eingerichtet, um festzustellen, ob bei dem ersten Gateway eine Störung vorliegt, und wobei der Kontroll-Knoten die erfassten Zustandsdaten an das zweite Gateway über das Primär-Kommunikationssystem überträgt, wenn der Kontroll-Knoten festgestellt hat, dass bei dem ersten Gateway eine Störung vorliegt. Dies geschieht ohne dass ein Befehl von dem zweiten Gateway an den Kontroll-Knoten geschickt werden muss.

### Beschreibung der Erfindung anhand von Ausführungsbeispielen

Im Folgenden sollen die Erfindung sowie vorteilhafte Ausführungsformen derselben anhand der in den Zeichnungen dargestellten Beispielen näher beschrieben und erläutert werden. Es zeigen:
- Fig. 1: eine schematische Darstellung eines erfindungsgemäßen Gateways; und
- Fig. 2: eine schematische Darstellung eines erfindungsgemäßen eines Datenerfassungssystems.

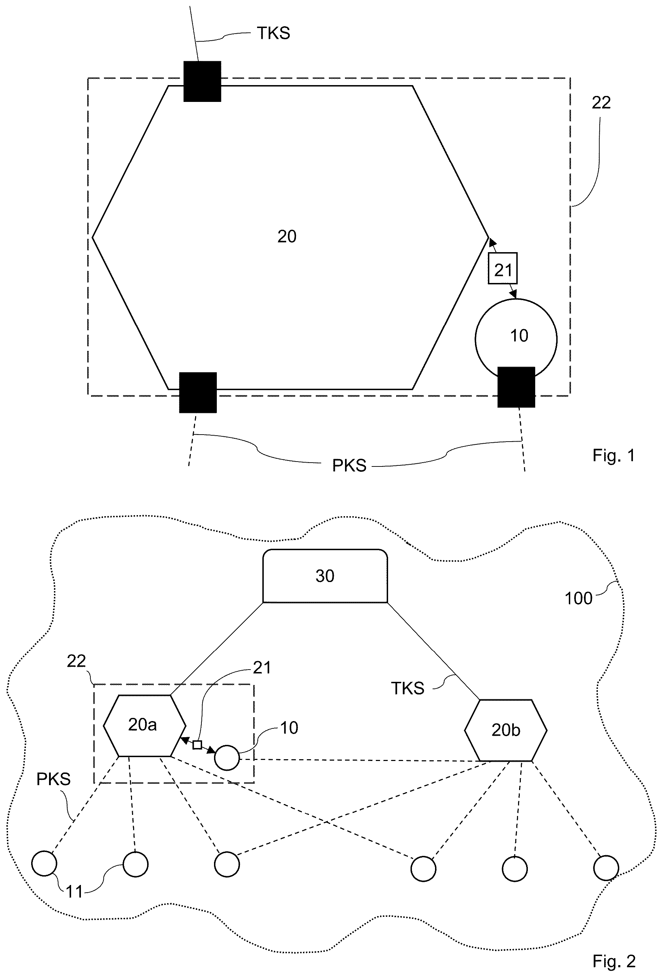

In der Fig. 1 ist eine schematische Darstellung eines erfindungsgemäßen Gateways 20. Dieses ist Teil eines Datenerfassungssystems 100 (s. Fig. 2). Das Gateway 20 ist mit einem Kontroll-Knoten 10 gekoppelt, welcher eingerichtet ist um Zustandsdaten 21 des Gateways 20 zu erfassen. Der Kontroll-Knoten 10 umfasst eine MPU (Mikro-Kontroller), verschiedene Sensoren, einen Speicher und eine Funkantenne.

Die Kopplung von Gateway 20 und Kontroll-Knoten 10 kann über ein Kabel oder auch kabellos erfolgen. Mit den Sensoren oder durch Auslesen des Gateways 20 können die Zustandsdaten 21 gesammelt und auf dem Speicher aufbewahrt werden. Die Funkantennen sind eingerichtet um die Zustandsdaten 21 per Funk über ein Primär-Kommunikationssystem PKS an ein weiteres Gateway 20 des Datenerfassungssystems 100 zu übertragen. Der Kontroll-Knoten 10 ist an die Stromversorgung des ersten Gateways 20 angebunden, weist jedoch eine von dem Gateway 20 unabhängige Stromquelle zum Betrieb des Kontroll-Knotens 10 auf. So wird der Kontroll-Knoten 10 im Normalbetrieb durch die Stromversorgung des Gateways 20 versorgt. Im Störungsfall wird der Betrieb des Kontroll-Knotens 10 auf die unabhängige Stromquelle umgestellt, sodass ein Erfassen und Übertragen der Zustandsdaten 21 weiterhin möglich ist.

Das Gateway 20 weist selbst Funkantennen zur Kommunikation mit dem Datenerfassungssystem 100 über das Primär-Kommunikationssystem PKS und ein Tertiär-Kommunikationssystem TKS auf. Es umfasst weiterhin ein Gehäuse 22. Dabei ist der Kontroll-Knoten 10 fest mit dem Gateway 20 verbunden. In diesem Fall ist der Kontroll-Knoten 10 in dem Gehäuse 22 des Gateways 20 angeordnet.

Fig. 2 zeigt ein erfindungsgemäßes Datenerfassungssystem 100 umfassend ein Head-End-System 30, ein erstes Gateway 20a und ein zweites Gateway 20b, mehrere Knoten 11 und einen Kontroll-Knoten 10. Zumindest bei dem ersten Gateway 20a handelt es sich um ein Gateway 20 wie in Fig. 1 dargestellt. Ein solches Datenerfindungssystem 100 kann darüber hinaus noch weitere Gateways 20 umfassen. Die Knoten 11 sind jeweils zur Funkübertragung von Daten über das Primär-Kommunikationssystem PKS an das erste Gateway 20a und/oder an das zweite Gateway 20b und/oder weitere Gateways 20 eingerichtet. Dabei sind Redundanzen von einer Kommunikation von zwei bis drei Gateways 20 mit einem Knoten 11 üblich. Das erste Gateway 20a und das zweite Gateway 20b sind jeweils zur Funkübertragung von Daten über das Tertiär-Kommunikationssystem TKS an das Head-End-System 30 eingerichtet. Auch alle weiteren Gateways 20 sind derart eingerichtet. Der Kontroll-Knoten 10 ist zur Erfassung von Zustandsdaten 21 des ersten Gateways 20a und zur Funkübertragung der erfassten Zustandsdaten 21 über das Primär-Kommunikationssystem PKS an das zweite Gateway 20b eingerichtet. Das zweite Gateway 20b ist dabei weiterhin so eingerichtet, dass die Zustandsdaten 21 über das Tertiär-Kommunikationssystem TKS an das Head-End-System 30 übertragen werden können. Das Primär-Kommunikationssystem PKS zur Funkübertragung ist auf einem vorgegebenen Primär-Frequenzband eingerichtet, welches Primär-Frequenzband eine Bandbreite ≤ 500 kHz, bevorzugt ≤ 250 kHz, besonders bevorzugt ≤ 125 kHz, aufweist. Das Primär-Kommunikationssystem PKS ist weiterhin auf einer Low Power Wide Area Network (LPWAN) Technologie basierend ist und/oder das Tertiär-Kommunikationssystem (TKS) auf einer Wide Area Network (WAN) oder Long Term Evolution (LTE) Technologie basierend.

Die Zustandsdaten 21 umfassen Daten betreffend eine Position und/oder eine Stromversorgung des ersten Gateways 20a und/oder Daten betreffend eine Netzwerkkonfiguration über das Primär-Kommunikationssystem PKS und/oder über das Tertiär-Kommunikationssystem TKS.

Die Knoten 11 sind festinstalliert und dazu eingerichtet, um Verbrauchsdaten zu erfassen. Dazu umfassen sie eine MPU (Mikro-Controller), verschiedene Sensoren und eine Funkantenne zur Übertragung der Verbrauchsdaten an das erste Gateway 20a, das zweite Gateway 20b oder ein weiteres Gateway 20 über das Primär-Kommunikationssystem PKS.

Im Normalbetrieb übertragen die Knoten 11 Daten, vorzugsweise Verbrauchsdaten, über das Primär-Kommunikationssystem PKS an das erste Gateway 20a und/oder das zweite Gateway 20b. Außerdem sind das erste Gateway 20a und das zweite Gateway 20b, sowie weitere Gateways 20, störungsfrei betrieben und übertragen jeweils Daten über das Tertiär-Kommunikationssystem TKS an das Head-End-System 30.

Das Datenerfassungssystem 100 ist dabei so eingerichtet, dass ein Erfassen der Zustandsdaten 21 über das erste Gateway 20a durch den Kontroll-Knoten 10 und eine Übertragung über das Primär-Kommunikationssystem PKS an das zweite Gateway 20b und eine Übertragung der Zustandsdaten 21 über das erste Gateway 20a durch das zweite Gateway 20b über das Tertiär-Kommunikationssystem TKS an das Head-End-System 30 ermöglicht ist. Je nach Ausführung kann das Erfassen und Übertragen der Zustandsdaten 21 im Normalbetrieb oder erst im Störungsfall erfolgen.

Bei einem Erfassen und Übertragen auch im Normalbetrieb erfasst das erste Gateway 20a Autostatusdaten über sich selbst und überträgt die Autostatusdaten über das Tertiär-Kommunikationssystem TKS an das Head-End-System 30, wobei das Head-End-System 30 eingerichtet ist, um die Autostatusdaten und die von dem Kontroll-Knoten 10 erfassten Zugangsdaten 21 zu vergleichen. Durch den Vergleich können Störungssituation und Störungsursachen schneller erkannt werden. Im Störungsbetrieb wird das Erfassen und Übertragen der Zustandsdaten 21 und soweit möglich der Autostatusdaten weitergeführt.

Erfolgt das Erfassen und Übertragen der Zustandsdaten 21 jedoch nicht im Normalbetrieb, so sendet das Head-End-System 30 im Störungsfall ein Befehl an das zweite Gateway 20b, wobei dem Kontroll-Knoten 10 von dem zweiten Gateway 20b der Befehl zur Zustandsüberwachung über das Primär-Kommunikationssystem PKS übertragen wird, welcher Befehl den Kontroll-Knoten 10 veranlasst die Zustandsdaten 21 über das erste Gateway 20a zu erfassen. Der Befehl kann jedoch auch manuell außerhalb eines Störungsfalls durch das Head-End-Systemgesendet werden.

Alternativ erfasst der Kontroll-Knoten 10 die Zustandsdaten 21 über das erste Gateway 20a kontinuierlich, wobei der Kontroll-Knoten 10 eingerichtet ist, um festzustellen, ob bei dem ersten Gateway 20a eine Störung vorliegt. Der Kontroll-Knoten 10 überträgt die erfassten Zustandsdaten 21 dann an das zweite Gateway 20b über das Primär-Kommunikationssystem PKS, wenn der Kontroll-Knoten 10 festgestellt hat, dass bei das erste Gateway 20a eine Störung vorliegt.

In einem wie Fig. 2 dargestellten Datenerfassungssystem 100 können alle Gateways 20 erste Gateways 20a sein. Gleichzeitig können alle Gateways 20 auch zweite Gateways 20b sein. Somit ist jedes Gateway 20 an einen Kontroll-Knoten 10 gekoppelt, sodass ihre Zustandsdaten 21 erfasst und an das Head-End-System 30 übertragen werden können. Die Zustandsdaten 21 können dann von jedem Gateway 20, welches mit dem Kontroll-Knoten 10 über das Primär-Kommunikationssystem PKS verbunden ist (d.h. in dessen Reichweite ist), empfangen und an das Head-End-System 30 übertragen werden.

### BEZUGSZEICHENLISTE

- 10: Kontroll-Knoten
- 11: Knoten
- 20: Gateway
- 20a: erstes Gateway
- 20b: zweites Gateway
- 21: Zustandsdaten
- 22: Gehäuse
- 30: Head-End-System
- 100: Datenerfassungssystem
- PKS: Primär-Kommunikationssystem
- TKS: Tertiär-Kommunikationssystem

## Patentansprüche

1. Gateway (20) für ein Datenerfassungssystem (100), welches Gateway (20) mit einem Kontroll-Knoten (10) gekoppelt ist, welcher Kontroll-Knoten (10) eingerichtet ist, um Zustandsdaten (21) des Gateways (20) zu erfassen und per Funk über ein Primär-Kommunikationssystem (PKS) an ein weiteres Gateway (20) des Datenerfassungssystems (100) zu übertragen.

2. Gateway (20) nach Anspruch 1, wobei der Kontroll-Knoten (10) fest mit dem Gateway (20) verbunden ist, vorzugsweise der Kontroll-Knoten (10) in einem Gehäuse (22) des Gateways (20) angeordnet ist.

3. Datenerfassungssystem (100) umfassend ein Head-End-System (30), zumindest ein erstes Gateway (20a) und ein zweites Gateway (20b), mehrere Knoten (11), und einen Kontroll-Knoten (10), wobei
- die Knoten (11) jeweils zur Funkübertragung von Daten über ein Primär-Kommunikationssystem (PKS) an das erste Gateway (20a) und/oder an das zweite Gateway (20b) eingerichtet sind;
- das erste Gateway (20a) und das zweite Gateway (20b) jeweils zur Funkübertragung von Daten über ein Tertiär-Kommunikationssystem (TKS) an das Head-End-System (30) eingerichtet sind;
- der Kontroll-Knoten (10) zur Erfassung von Zustandsdaten (21) des ersten Gateways (20a) eingerichtet ist;
- der Kontroll-Knoten (10) zur Funkübertragung der erfassten Zustandsdaten (21) über das Primär-Kommunikationssystem (PKS) an das zweite Gateway (20b) eingerichtet ist.

4. Datenerfassungssystem (100) nach Anspruch 3, wobei die Zustandsdaten (21) umfassen
- Daten betreffend eine Position des ersten Gateways (20a); und/oder
- Daten betreffend eine Stromversorgung des ersten Gateways (20a);
und/oder
- Daten betreffend eine Netzwerkkonfiguration über das Primär-Kommunikationssystem (PKS); und/oder
- Daten betreffend eine Netzwerkkonfiguration über das Tertiär-Kommunikationssystem (TKS).

5. Datenerfassungssystem (100) nach Anspruch 3 oder 4, wobei die Knoten (11) festinstalliert sind und dazu eingerichtet sind, um Verbrauchsdaten zu erfassen.

6. Datenerfassungssystem (100) nach einem der Ansprüche 3 bis 5, wobei der Kontroll-Knoten (10) an eine Stromversorgung des ersten Gateways (20a) angebunden ist.

7. Datenerfassungssystem (100) einem der Ansprüche 3 bis 6, wobei der Kontroll-Knoten (10) eine von dem ersten Gateway (20a) unabhängige Stromquelle zum Betrieb des Kontroll-Knotens (10) aufweist.

8. Datenerfassungssystem (100) einem der Ansprüche 3 bis 7, wobei der Kontroll-Knoten (10) zur unidirektionalen oder bidirektionalen Funkübertragung über das Primär-Kommunikationssystem (PKS) mit dem zweiten Gateway (20b) eingerichtet ist.

9. Datenerfassungssystem (100) einem der Ansprüche 3 bis 8, wobei das Primär-Kommunikationssystem (PKS) zur Funkübertragung auf einem vorgegebenen Primär-Frequenzband eingerichtet ist, welches Primär-Frequenzband eine Bandbreite ≤ 500 kHz, bevorzugt ≤ 250 kHz, besonders bevorzugt ≤ 125 kHz, aufweist.

10. Datenerfassungssystem (100) einem der Ansprüche 3 bis 9, wobei das Primär-Kommunikationssystem (PKS) auf einer Low Power Wide Area Network (LPWAN) Technologie basierend ist und/oder das Tertiär-Kommunikationssystem (TKS) auf einer Wide Area Network (WAN) oder Long Term Evolution (LTE) Technologie basierend ist.

11. Datenerfassungssystem (100) einem der Ansprüche 3 bis 10, wobei das erste Gateway (20a) ein Gateway (20) nach Anspruch 1 oder 2 ist.

12. Verfahren zur Betriebsüberwachung eines Gateways (20) in einem Datenerfassungssystem (100) umfassend die Schritte
- Bereitstellen eines Datenerfassungssystems (100) nach einem der Ansprüche 3 bis 11, wobei in einem Normalbetrieb des Datenerfassungssystems (100)
- die Knoten (11) Daten über das Primär-Kommunikationssystem (PKS) an das erste Gateway (20a) und/oder das zweite Gateway (20b) übertragen;
- das erste Gateway (20a) und das zweite Gateway (20b) störungsfrei betrieben sind und jeweils Daten über das Tertiär-Kommunikationssystem (TKS) an das Head-End-System (30) übertragen;
- Erfassen der Zustandsdaten (21) über das erste Gateway (20a) durch den Kontroll-Knoten (10) und Übertragung über das Primär-Kommunikationssystem (PKS) an das zweite Gateway (20b); und
- Übertragung der Zustandsdaten (21) über das erste Gateway (20a) durch das zweite Gateway (20b) über das Tertiär-Kommunikationssystem (TKS) an das Head-End-System (30).

13. Verfahren nach Anspruch 12, wobei im Normalbetrieb das erste Gateway (20a) Autostatusdaten über sich selbst erfasst und die Autostatusdaten über das Tertiär-Kommunikationssystem (TKS) an das Head-End-System (30) überträgt, wobei das Head-End-System (30) die Autostatusdaten und die von dem Kontroll-Knoten (10) erfassten Zugangsdaten (21) zu vergleicht.

14. Verfahren nach Anspruch 12 oder 13, wobei dem Kontroll-Knoten (10) von dem zweiten Gateway (20b) ein Befehl zur Zustandsüberwachung über das Primär-Kommunikationssystem (PKS) übertragen wird, welcher Befehl den Kontroll-Knoten (10) veranlasst die Zustandsdaten (21) über das erste Gateway (20a) zu erfassen.

15. Verfahren nach einem der Ansprüche 12 bis 14, wobei der Kontroll-Knoten (10) die Zustandsdaten (21) über das erste Gateway (20a) kontinuierlich erfasst, und wobei der Kontroll-Knoten (10) eingerichtet ist, um festzustellen, ob bei dem ersten Gateway (20a) eine Störung vorliegt, und wobei der Kontroll-Knoten (10) die erfassten Zustandsdaten (21) an das zweite Gateway (20b) über das Primär-Kommunikationssystem (PKS) überträgt, wenn der Kontroll-Knoten (10) festgestellt hat, dass bei das erste Gateway (20a) eine Störung vorliegt.
